# EUROPEAN PATENT SPECIFICATION

(11) **EP 3 194 660 B1**
(45) Date of publication and mention of the grant of the patent: **31.10.2018**
(21) Application number: 15784460.6
(22) Date of filing: 15.09.2015
(51) Int. Cl.: E01H 1/04, A46B 13/00, A47L 5/14

(54) **CLEANING DEVICE**
REINIGUNGSVORRICHTUNG
DISPOSITIF DE NETTOYAGE

(30) Priority: 15.09.2014 BE 201400692
(43) Date of publication of application: 26.07.2017
(73) Proprietor: Astrobot, 1780 Wemmel (BE)
(72) Inventor: DE GEYTER, Nicolas, B-2540 Hove (BE)
(74) Representative: Gevers Patents
(86) International application number: PCT/IB2015/001628
(87) International publication number: WO 2016/042383

(56) References cited:
- WO-A1-2006/046863
- US-A1- 2005 044 656

## Description

The invention relates to a cleaning device comprising a chassis that can be moved over a ground surface, said cleaning device comprising a space in which a roller-shaped brush provided with bristles is arranged in a rotatable manner about an axle in such a way that said ground surface can be brushed therewith, said space being connected with an outlet channel for the removal of material brushed away by the bristles.

Such a cleaning device is generally known and is used, among other things, for cleaning roads, squares, sports fields, factory halls, public spaces etc... These cleaning devices are more particularly used for cleaning artificial grass surface and to collect litter. Wheels are preferably mounted on the chassis in order to thereby be able to drive the cleaning device over the ground. With its bristles the brush is in contact with the ground so that the latter can be brushed during a passage of the cleaning device. The brush thus brushes the ground and the collected material is removed via the outlet channel.

A disadvantage of the known cleaning devices is that rubbish accumulates between the bristles when the brush rolls over the ground. This rubbish then affects the operation of the bristles as a result of which cleaning takes place less efficiently.

A further disadvantage of the known cleaning devices is that cleaning devices which can be used on artificial grass are complex in construction as a result of which they are voluminous and expensive, and that the simpler and smaller familiar cleaning devices are not designed for use on artificial grass so that these are not suitable for use on artificial grass and in the best case provided poor results.

WO-A-2006/046863 discloses a cleaning device according too the preamble of claim 1.

The aim of the invention is to provide a cleaning device wherein the brush does not become dirty so quickly and therefore operates more efficiently.

For this the cleaning device in accordance with the invention is characterised in that arranged in the brush, coaxially with the axle, is an air channel which is provided with a number of openings that are directed towards the outlet channel and open between the bristles. Through the presence of the air channel it is possible to supply air to the brush. As openings are provided in the air channel which open out between the bristles, air is supplied into the bristles, said air then blowing away material that may have built up in the bristles. As the openings are also directed towards the outlet channel, the material blown out of the bristles is blown towards the outlet channel and removed. By blowing away the material accumulating between the bristles, it is prevented that the material builds up there permanently, so that the brush is kept clean and brushing takes place more efficiently.

A first preferred embodiment in accordance with the invention is characterised in that the series of openings extends within an angle of 120°. Through this the air is concentrated within this angle and it is ensured that the air is blown well into the outlet channel.

A second preferred form of embodiment of a cleaning device in accordance with the invention is characterised in that arranged in the outlet channel is a vibrating sieve, said sieve being provided with an outlet which is directed towards the underside of the chassis. Through this material can be selectively returned.

Preferably the cleaning device is provided with a navigation system in order to guide it over the ground along a predetermined path. Through this the cleaning device can be guided in accordance with a predetermined route over the ground.

The aim of the invention is also to provide a cleaning device wherein the above-described disadvantages are countered when used on artificial grass.

This aim is achieved by way of a self-propelling cleaning device for the cleaning of an artificial grass surface, comprising a chassis, moving means for moving the chassis over the artificial grass surface, a rechargeable battery for storing energy and configured in such a way that the rechargeable battery provides the moving means with energy, a roller-shaped brush provided with bristles positioned in a space of the cleaning device, wherein the brush is mounted in a rotatable manner about an axle and arranged so that it can brush the artificial grass surface, an outlet channel in the continuation of the space that opens into a collection bin for collecting the rubbish that has been brushed away, and a sieve arranged on the underside of the outlet channel provided with an inlet surface and an outlet surface, wherein the sieve is positioned so that during use the outlet surface is positioned in relation to the artificial grass surface so that brushed away material that passes through the sieve falls onto the artificial grass surface.

The self-propelling cleaning device has the advantage that it can be compactly designed, as a result of which it is less voluminous and expensive in comparison with known cleaning devices for artificial grass surfaces. The specific structure of this cleaning device also ensures that very good results are obtained on an artificial grass surface.

In certain forms the self-propelling cleaning device also comprises a decompacter unit for the decompacting of the artificial grass surface, wherein the decompacter unit is attached in such a way that during use the artificial grass surface is decompacted after brushing.

The presence of a decompacter unit ensures a better end result in that it returns the individual artificial grass blades back into their correct position and the in-fill of the artificial grass in ventilated.

In certain forms the self-propelling cleaning device also comprises a magnetic strip for removing metal objects on the artificial grass surface.

This has the advantage that metal particles that are either not brushed away by the brush 6, or are brushed away and the returned to the artificial grass surface via the sieve 10 can still be removed from the artificial grass surface by means of the magnetic strip.

In certain forms the self-propelling cleaning device has at least three wheels and the brush and the sieve are attached between a first axle of a first wheel and a second axle of a second wheel of the at least three wheels.

This structure wherein the brush and the sieve are attached between the wheels makes for a very stable appliance that above all is not too large.

In some forms the decompacter unit is attached in such a way that during use the decompacter unit decompacts the artificial grass surface after it has been brushed, material added via the sieve, and has been driven over with the wheels.

This structure has the advantage that the imperfections caused by the brushing, the return of material and by the wheels are eliminated as the last step.

In certain forms the brush is attached in the space by means of a hydraulic suspension mechanism.

In some forms the self-propelling cleaning device comprises control means for controlling the moving means.

In some forms the control means comprises a processor and a memory, wherein the memory has a software application that is executable in the processor, and wherein the software application has a program for calculating the trajectory of the self-propelling cleaning device.

This has the advantage that the cleaning device can operate in a completely autonomously manner while still remaining compact.

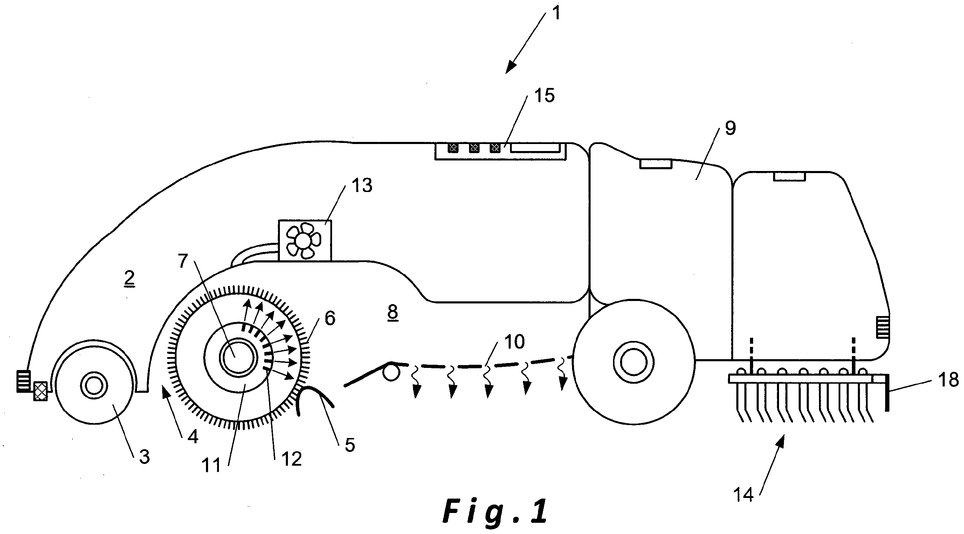

The invention will now be described in more detail with the aid of attached figure 1 which shows an embodiment of the cleaning device in accordance with the invention.
Figure 1 shows a schematic view of an embodiment of a cleaning device in accordance with the present invention.
Figure 2 shows a schematic view of a self propelling cleaning device.
Figure 3 shows a further example of a self propelling cleaning device.

The cleaning device (1) comprises a chassis (2) on which wheels (3) are attached in order to allow the cleaning device to travel over a ground surface. On the chassis a body is provided in which there is a space (4). The space is at the bottom of the chassis to that it can be accessed from below. Attached in this space is a roller-shaped brush (6) which is provided with bristles (5) and is mounted in a rotatable manner about an axle (7). The brush is attached in such a way that said surface can be brushed with it. The brush is rotabably driven either by a motor or by friction on the ground surface when the cleaning device moves over it.

The space (4) is connected with an outlet channel (8) for removing the material brushed away by the bristles. The outlet channel arranged in the continuation of the space and preferably extends in the longitudinal direction of the chassis. The outlet channel opens into a collection bin (9) in which the material brushed away by the brush is collected.

Arranged in the outlet channel is a vibrating sieve (10), said sieve being provided with an outlet which is directed towards the underside of the chassis. Through this, material can be selectively returned. This is the case, for example, when artificial grass is being brushed and structural elements of the artificial grass are also brushed away. Because the sieve vibrates, through shaking and suitable dimensioning of the mesh of the sieve, it is ensured that the rubbish does not pass through the sieve whereas the structural elements do.

An air channel (11) is arranged in the brush (6) and co-axially with the axle (7). The air channel which is provided with a number of openings (12) that are directed towards the outlet channel (8) and open between the bristles. The air channel is connected to a fan (13) which produces air. The series of openings preferably extends within an angle of 120°.

The produced air is supplied to the air channel and is distributed co-axially along the axle of the brush. The air emerges in the opening (12) and thus into the bristles in order to pass through them. On passing through the bristles the air blows away material remaining in the bristles. As the openings are directed towards the outlet channel (8) the air that has passed through the bristles eventually ends up in the outlet channel. Once the air has blown material out of the bristles, the material will finally end up in the outlet channel and will be removed there. Through blowing air between the bristles, the brush remains clean and brushing is more efficient.

If required the cleaning device is provided with a decompacter unit (14) for decompacting the brushed surface. Preferably, viewed in the longitudinal direction of the chassis, the decompacter unit is arranged behind the brush and the outlet channel in order to thereby decompact the already brushed surface.

Preferably the cleaning device is provided with a navigation system (15) in order to guide it over the ground in accordance with a predetermined path and preferably without an operator. The navigation system can be constituted by a known GPS system, or by means of a local system that works together with detectors applied in the ground.

It is also possible to provide the cleaning device with a magnetic strip (18) for picking up metal objects that may have been left on the ground. The magnetic strip is preferably arranged at the rear of the cleaning device and extends downward to the bottom.

In a further form of embodiment of the cleaning device, a spraying element (16) is attached at the front for spraying, with water for example, the surface to be cleaned. In this embodiment a water tank (19) is also provided. Furthermore, it is also possible to arrange a dosing system (17) behind the spraying element (16) in order dispense a product, such as a cleaning agent, grit or antifreeze. If required the spraying element and dosing system can be arranged in one and the same unit. The mixing of the product with water and spraying it onto the surface can promote cleaning or thawing. The spraying element can also be arranged at the rear of the cleaning device.

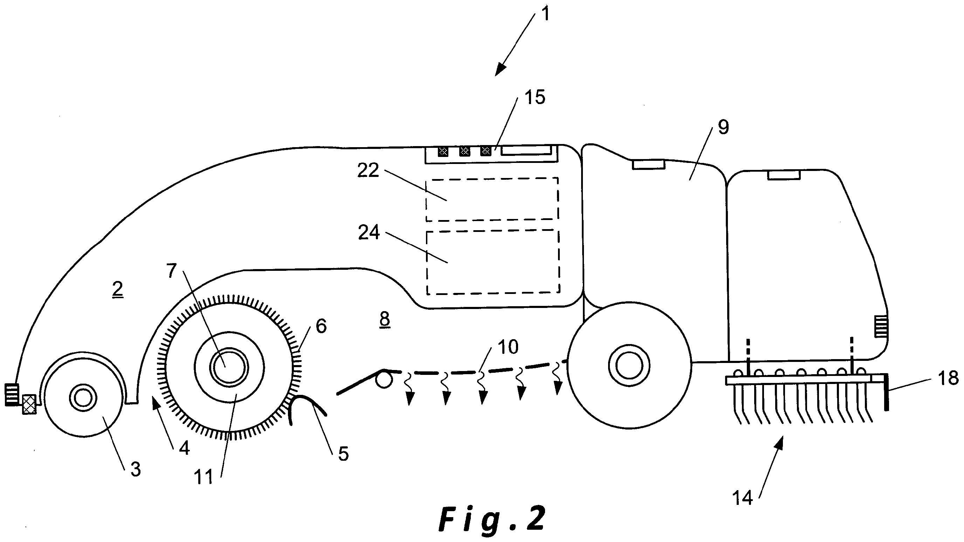

Figure 2 shows a self-propelling cleaning device 1 for the cleaning an artificial grass surface. The cleaning device has a chassis 2. At least three wheels 3 are attached to the chassis in order to move the chassis 2 over the artificial grass surface. The wheels 3 can be driven by a motor 24 that obtains energy from a rechargeable battery 22. The rechargeable battery 22 can be charged or replaced. In one form of embodiment the rechargeable battery 22 can be charged by means of an integrated solar panel. The solar panel is attached so that the solar panel can absorb solar energy while the cleaning device 1 moves over the artificial grass surface. On the chassis a body is provided in which there is a space 4. The chassis 2 and the body can also form one entity. The space 4 is arranged on the bottom of the chassis 2 so that it is open to the artificial grass surface when the cleaning device 1 moves over the artificial grass surface. Attached in this space 4 is a roller-shaped brush 6 which is provided with bristles 5 and is mounted in a rotatable manner about an axle 7. The brush 6 is attached in such a way that the artificial grass surface can be brushed with it. The brush 6 can be driven by a motor or the brush 6 can be rotated through friction with the artificial grass surface when the cleaning device 1 moves over the artificial grass surface. In the continuation of the space 4 is an outlet channel 8 which opens into a collection bin 9. The rubbish that is brushed away by the brush is trapped in the collected bin 9. On the underside of the outlet channel 8 a sieve 10 is arranged. In inlet surface of the sieve is directed towards the space 4 and the outlet surface of the sieve 10 is directed towards the opposite side so that the outlet surface is directed towards the artificial grass surface when the cleaning device 1 moves over the artificial grass surface. In this way, structural material from the artificial grass surface that is also brushed away by the brush 6 during brushing falls back onto the artificial grass surface through the openings in the sieve 10.

A decompacter unit 14 may be arranged at the back of the cleaning device. The decompacter unit ensures that the artificial grass is first brushed by the brush 6, then sprinkled with returned structural material and finally driven over by the wheels 2, and decompacted again so that the artificial grass is returned into the optimum position once more.

The cleaning device 1 can also be provided with a magnetic strip as shown in the form of embodiment in figure 1.

The cleaning device can also be provided with a memory and a processor for controlling the movement of the cleaning device. The memory can also include a software application that can be run by the processor. When running the software application the processor uses a method of calculating the trajectory of the cleaning device.

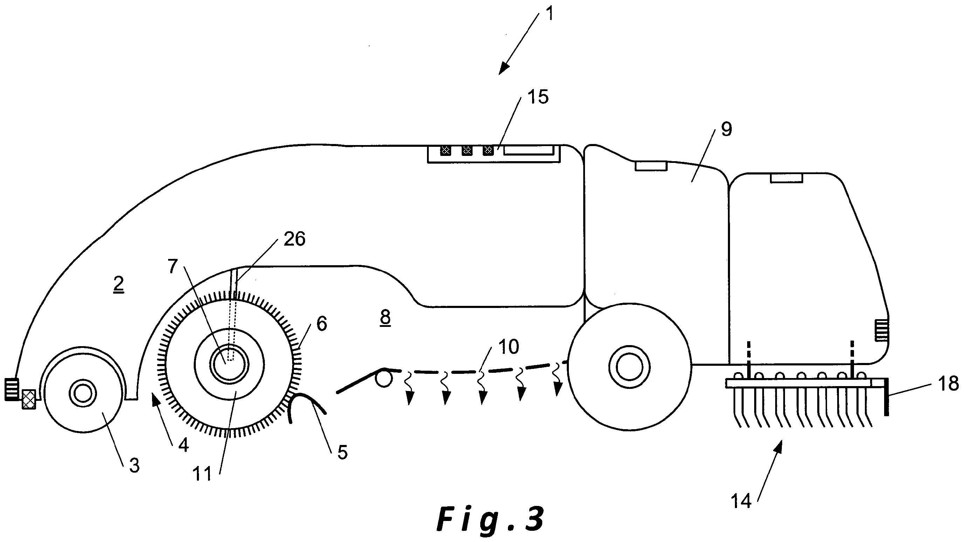

Figure 3 shows a further form wherein the brush 6 is attached in a controllable manner in the space 4 by means of a hydraulic mechanism 26. The hydraulic mechanism ensures that unevenness in the surface can be offset.

## Claims

1. Cleaning device (1) comprising a chassis (2) that can be moved over a ground surface, said cleaning device comprising a space (4) in which a roller-shaped brush (6) provided with bristles (5) is arranged in a rotatable manner about an axle in such a way that said ground surface can be brushed therewith, said space (4) being connected with an outlet channel (8) for the removal of material brushed away by the bristles, **characterised in that** in the brush (6) and coaxially with the axle an air channel (11) is arranged, said air channel being provided with a series of openings (12) which are directed towards the outlet channel (8) and open between the bristles (5).

2. Cleaning device (1) according to claim 1 **characterised in that** the series of openings (12) extends within an angle of 120°.

3. Cleaning device (1) according to claim 1 or 2 **characterised in that** arranged in the outlet channel (8) is a vibrating sieve (10), said sieve being provided with an outlet which is directed towards the underside of the chassis.

4. Cleaning device (1) according to any one of claims 1 to 3 **characterised in that** a it is provided with a navigation system (15) in order to guide it over the ground surface in accordance with a predetermined path.

5. Cleaning device (1) according to claim 4 **characterised in that** it can be driven autonomously.

6. Cleaning device (1) according to any one of claims 1 to 5 **characterised in that** it is provided with a magnetic strip (18).

7. Cleaning device (1) according to any one of claims 1 to 6 **characterised in that** it is provided with a spraying element (16).

8. Cleaning device (1) according to any one of claims 1 to 7 **characterised in that** it is provided with a dispensing system.

## Patentansprüche

1. Reinigungsvorrichtung (1) umfassend ein Chassis (2), das über eine Bodenfläche bewegbar ist, wobei die Reinigungsvorrichtung einen Raum (4) umfasst, in dem eine mit Borsten (5) versehene rollenförmige Bürste (6) um eine Achse drehbar angeordnet ist, so dass die Bodenoberfläche damit gebürstet werden kann, wobei der Raum (4) mit einem Auslaufkanal (8) zum Entfernen von durch die Borsten weggebürstetem Material verbunden ist, **dadurch gekennzeichnet, dass** in der Bürste (6) und koaxial zur Achse ein Luftkanal (11) angeordnet ist, wobei der Luftkanal mit einer Reihe von Öffnungen (12) versehen ist, die auf den Auslaufkanal (8) gerichtet und zwischen den Borsten (5) offen sind.

2. Reinigungsvorrichtung (1) nach Anspruch 1, **dadurch gekennzeichnet, dass** sich die Reihe von Öffnungen (12) innerhalb eines Winkels von 120° erstreckt.

3. Reinigungsvorrichtung (1) nach Anspruch 1 oder 2, **dadurch gekennzeichnet, dass** im Auslaufkanal (8) ein Schwingsieb (10) angeordnet ist, wobei das Schwingsieb mit einem zur Unterseite des Chassis gerichteten Auslauf versehen ist.

4. Reinigungsvorrichtung (1) nach einem der Ansprüche 1 bis 3, **dadurch gekennzeichnet, dass** sie mit einem Navigationssystem (15) versehen ist, um sie gemäß einem vorbestimmten Weg über die Bodenoberfläche zu führen.

5. Reinigungsvorrichtung (1) nach Anspruch 4, **dadurch gekennzeichnet, dass** sie autonom fahrbar ist.

6. Reinigungsvorrichtung (1) nach einem der Ansprüche 1 bis 5, **dadurch gekennzeichnet, dass** sie mit einem Magnetstreifen (18) versehen ist.

7. Reinigungsvorrichtung (1) nach einem der Ansprüche 1 bis 6, **dadurch gekennzeichnet, dass** sie mit einem Sprühelement (16) versehen ist.

8. Reinigungsvorrichtung (1) nach einem der Ansprüche 1 bis 7, **dadurch gekennzeichnet, dass** sie mit einem Abgabesystem versehen ist.

## Revendications

1. Dispositif de nettoyage (1) comprenant un châssis (2) qui peut être déplacé sur une surface du sol, ledit dispositif de nettoyage comprenant un espace (4) dans lequel une brosse en forme de rouleau (6) pourvue de soies (5) est agencée à rotation autour d'un axe de manière que ladite surface du sol puisse être brossée, ledit espace (4) étant raccordé à un canal de sortie (8) pour le retrait des matières brossées par les soies, **caractérisé en ce qu'** un canal d'air (11) est agencé dans la brosse (6) et coaxialement avec l'axe, ledit canal d'air étant pourvu d'une série d'ouvertures (12) qui sont dirigées vers le canal de sortie (8) et débouchent entre les soies (5).

2. Dispositif de nettoyage (1) selon la revendication 1, **caractérisé en ce que** la série d'ouvertures (12) s'étend dans un angle de 120°.

3. Dispositif de nettoyage (1) selon la revendication 1 ou 2, **caractérisé en ce que** l'on agence dans le canal de sortie (8) un tamis vibrant (10), ledit tamis étant pourvu d'une sortie qui est dirigée vers la partie inférieure du châssis.

4. Dispositif de nettoyage (1) selon l'une quelconque des revendications 1 à 3, **caractérisé en ce qu'**il est pourvu d'un système de navigation (15) afin de le guider sur la surface du sol selon un trajet prédéterminé.

5. Dispositif de nettoyage (1) selon la revendication 4, **caractérisé en ce qu'**il peut être entraîné de manière autonome.

6. Dispositif de nettoyage (1) selon l'une quelconque des revendications 1 à 5, **caractérisé en ce qu'**il est pourvu d'une bande magnétique (18).

7. Dispositif de nettoyage (1) selon l'une quelconque des revendications 1 à 6, **caractérisé en ce qu'**il est pourvu d'un élément de pulvérisation (16).

8. Dispositif de nettoyage (1) selon l'une quelconque des revendications 1 à 7, **caractérisé en ce qu'**il est pourvu d'un système de distribution.
